# EUROPEAN PATENT APPLICATION

(11) **EP 4 005 728 A1**
(43) Date of publication of application: **01.06.2022**
(21) Application number: 21210529.0
(22) Date of filing: 25.11.2021
(51) Int. Cl.: B23K 35/30, B23K 26/322, B23K 35/02, B32B 15/01, B23K 26/211, B23K 103/16, B23K 103/20, B23K 101/34

(54) **LASER WELDING COATED STEEL BLANKS WITH FILLER WIRE**

(30) Priority: 25.11.2020 US 202017104954
(71) Applicant: Magna International Inc., Aurora, ON L4G 7K1 (CA)
(72) Inventor: Gu, Hongping, Newmarket, L3X 0A1 (CA); Mueller, Robert Eric, Milton, L9T2X7 (CA); Tran, Khoi Huynh, Toronto, M6P0A2 (CA); Yan, Qi, Markham, L6C2R7 (CA); Penner, Pavlo, Woodbrige, L4H2S1 (CA); Denijs, Eric Albertus, Toronto, M5A 2V6 (CA)
(74) Representative: Grünecker Patent- und Rechtsanwälte PartG mbB

(57) **Abstract**

A system includes a laser welder and a filler wire feed. The laser welder is configured to weld a workpiece to at least one additional workpiece to form a welded assembly. Each of the workpieces is formed from a steel material and comprises an aluminum based coating thereon. The filler wire feed is configured to feed a filler wire to an interface between the workpieces when the workpieces are being welded to each other to form the welded assembly. The filler wire comprises a composition that includes nickel and chromium. The filler wire is configured to bind with aluminum in the aluminum based coating so as to minimize formation of brittle intermetallics due to mixing of the aluminum in the aluminum based coating with the iron/steel material in the weld joint.

## Description

### CROSS-REFERENCE TO RELATED APPLICATIONS

This application is a Continuation-In-Part of International Patent Application No. PCT/CA2019/050751, filed May 31, 2019, which claims priority to U.S. Provisional Patent Application No. 62/690,466, filed June 27, 2018, the contents of which are hereby incorporated by reference in their entirety.

### FIELD

The present patent application relates to a system and a method for laser welding coated steel blanks, for example, using a filler wire.

### BACKGROUND

Boron steel is often used in the automotive industry due to its ability to form a fully martensitic microstructure, which results in a high strength material. Despite low formability levels, boron steel can be hot stamped to increase formability, and create strong, formed structures such as a car door frame, through a hot stamping process. However, the boron steel alone tends to form an oxide layer at the surface during heat treatment. This oxide layer may create wear on the stamping die and prevent an adhesive painting process. Therefore, boron steel is often coated with an aluminum-silicon coating.

The aluminum-silicon coating on boron steel provides a barrier to prevent oxidization/scaling during the austenitization process and also allows the aluminum to react with iron within the coating. The iron-aluminum coating has a high melting point that is capable of withstanding the hot stamping process.

Hot stamping steel is commonly paired with laser blank welding due to the versatility of the process. Several blanks of different thicknesses and material can be joined together by the laser welding and then hot stamped into one formed component. This has many advantages such as the ability to have some parts with structural strength and some with crash energy absorption capabilities, different material thicknesses to save on weight and costs, and better nesting of the blanks to reduce coil scrap rates.

The problem is that the aluminum-silicon coating can negatively affect the laser welding process. During welding, the aluminum has a tendency to mix with the iron and form a brittle intermetallic, which can cause cracking along the weld. The aluminum-silicon coating on the high strength, hot stamping steel (e.g., Usibor) pollutes the weld pool during laser welding. This iron-aluminum intermetallic adversely affects the weld's hardenability. This also does not meet the mechanical property requirements (tensile strength, hardness, etc.) for a hot stamped component.

In a prior art method, ArcelorMittal Tailored Blanks (AMTB), the aluminum-silicon coating is removed using an ablation procedure (e.g., by an ablation laser). The highly accurate ablation process can remove the majority of the Al-Si coating, but leaves the intermetallic layer of Al-Fe. The uncoated blanks (or partially uncoated blanks) are then laser welded together.

In another prior art method, powder (supplied by a power feed nozzle) is added to bind the aluminum-silicon coating on the base metal, during the laser welding procedure. The issue with this prior art method is that the physical structure of the weld does not meet the criteria of all OEMs (Original Equipment Manufacturers). For example, there might be a low tolerance on undercut that the welds do not meet. It was also found that the laser welds do not handle variance in gap sizes as efficiently as required for certain specifications.

The present patent application provides improvements to systems and methods for laser welding coated steel blanks.

### SUMMARY

One aspect of the present patent application provides a system that includes a laser welder and a filler wire feed. The laser welder is configured to weld a workpiece to at least one additional workpiece to form a welded assembly. Each of the workpiece and the at least one additional workpiece is formed from a steel material. Each of the workpiece and the at least one additional workpiece comprises an aluminum based coating thereon. The workpiece and the at least one additional workpiece are positioned together to form an interface therebetween and a weld joint is formed by the laser welder between the workpiece and the at least one additional workpiece along the interface. The filler wire feed is configured to feed a filler wire to the interface when the workpiece and the at least one additional workpiece are being welded to each other to form the welded assembly. The filler wire comprises a composition that includes nickel and chromium. The filler wire is configured to bind with aluminum in the aluminum based coating so as to minimize formation of brittle intermetallics due to mixing of the aluminum in the aluminum based coating with iron or steel material in the weld joint.

Another aspect of the present patent application provides a method for laser welding a workpiece and at least one additional workpiece to form a welded assembly. The method comprises positioning the workpiece and the at least one additional workpiece together to form an interface therebetween. Each of the workpiece and the at least one additional workpiece is formed from a steel material. Each of the workpiece and the at least one additional workpiece comprises an aluminum based coating thereon. The method also comprises: forming a weld joint, by a laser welder, between the workpiece and the at least one additional workpiece along the interface; and feeding a filler wire, by a filler wire feed, to the interface when the workpiece and the at least one additional workpiece are being welded to each other to form the welded assembly. The filler wire comprises a composition that includes nickel and chromium. The method further comprises binding the filler wire with aluminum in the aluminum based coating, when the workpiece and the at least one additional workpiece are being welded to each other to form the welded assembly, so as to minimize formation of brittle intermetallics due to mixing of the aluminum in the aluminum based coating with iron or steel material in the weld joint.

These and other aspects of the present patent application, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In one embodiment of the present patent application, the structural components illustrated herein are drawn to scale. It is to be expressly understood, however, that the drawings are for the purpose of illustration and description only and are not intended as a definition of the limits of the present patent application. It shall also be appreciated that the features of one embodiment disclosed herein can be used in other embodiments disclosed herein. As used in the specification and in the claims, the singular form of "a", "an", and "the" include plural referents unless the context clearly dictates otherwise.

### BRIEF DESCRIPTION OF THE DRAWINGS

FIG. 1 shows a system in which a filler wire having a composition including nickel and chromium is used, during laser welding procedure, to bind aluminum-silicon coating on the steel blanks in accordance with an embodiment of the present patent application;
FIG. 2 shows a system in which a filler wire having a composition including nickel and chromium is used, during laser welding procedure, to bind aluminum-silicon coating on the steel blanks in accordance with another embodiment of the present patent application;
FIG. 3 shows a system in which a filler wire having a composition including nickel and chromium is used, during laser welding procedure, to bind the aluminum-silicon coating on the blanks in accordance with an embodiment of the present patent application;
FIG. 3A shows a system in which a filler wire having a composition including nickel and chromium is used, during laser welding procedure, to bind the aluminum-silicon coating on the blanks in accordance with another embodiment of the present patent application;
FIG. 4 shows a filler wire feed in accordance with an embodiment of the present patent application;
FIG. 4A shows a filler wire feed in accordance with another embodiment of the present patent application;
FIG. 5 shows a wire feed nozzle and a welding laser in accordance with an embodiment of the present patent application;
FIG. 6 shows a system in which a filler wire having a composition of nickel and chromium is used, during laser welding procedure, to bind the aluminum-silicon coating on the blanks, wherein the system is at a weld start position, in accordance with an embodiment of the present patent application;
FIG. 7 shows a system in which a filler wire having a composition of nickel and chromium is used, during laser welding procedure, to bind the aluminum-silicon coating on the blanks, wherein the system is at a weld end position, in accordance with an embodiment of the present patent application;
FIGS. 8, 8A and 9 show a system in which a filler wire having a composition of nickel and chromium is used, during laser welding procedure, to bind the aluminum-silicon coating on the blanks in accordance with an embodiment of the present patent application;
FIG. 10 is spectroscopy image of a weld formed using conventional filler wire, the weld shows aluminum is not well distributed or mixed in the weld, in accordance with an embodiment of the present patent application;
FIG. 11 shows a microstructure of the weld seam using the convention wire (used in FIG. 10) showing a substantial amount of Ferrite (lighter grey pixels in the image) mixed with Martensite;
FIG. 12 is a spectroscopy image of a weld seam formed using a filler wire of the present application, the weld seam shows more uniform A1 distribution than A1 distribution in FIG. 10;
FIG. 13 is a spectroscopy image of a weld seam formed using a filler wire of the present application, the weld seam shows more uniform Ni distribution; and
FIG. 14 shows a microstructure of the weld seam (e.g., of FIG. 10 or 11) having sufficient amount of Martensite (higher than in FIG. 11).

### DETAILED DESCRIPTION OF THE DRAWINGS

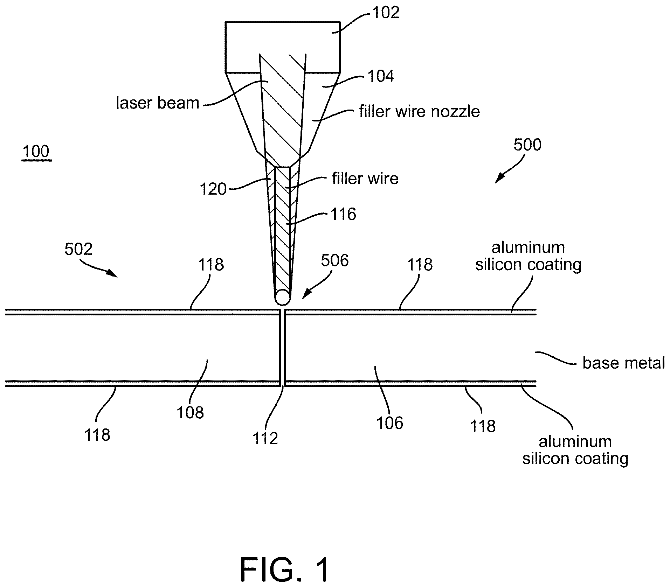

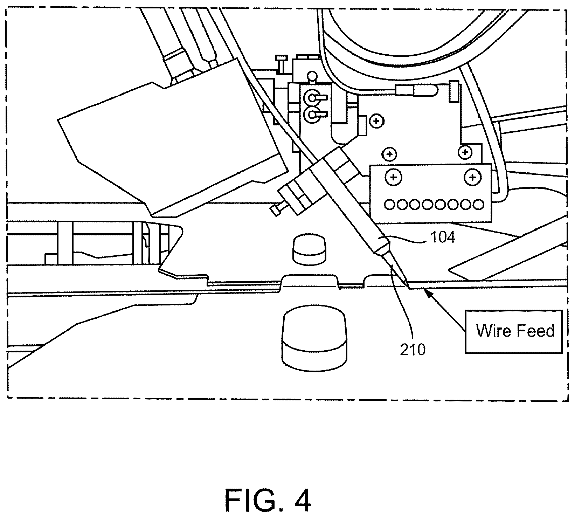

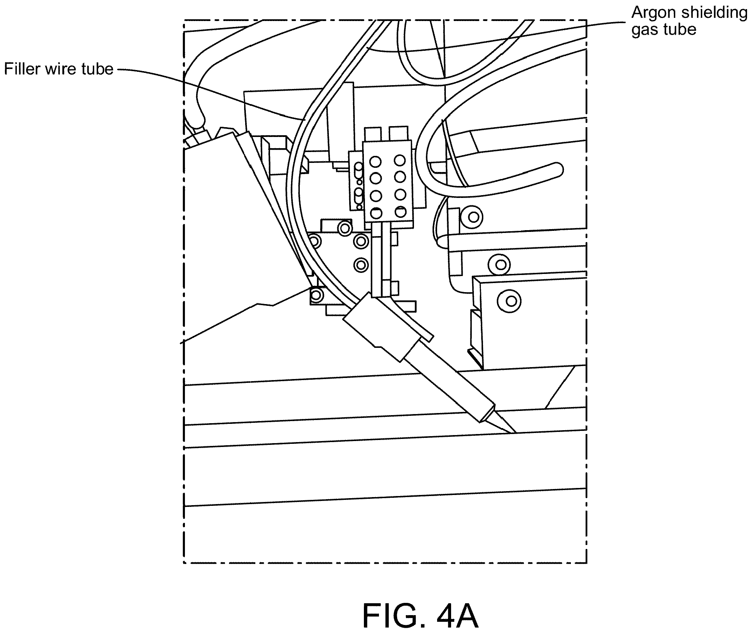

FIGS. 1-9 show a system 100 that includes a laser welder 102 and a filler wire feed 104. In one embodiment, the laser welder 102 is configured to weld a workpiece 106 to at least one additional workpiece 108 to form a welded assembly 110. Each of the workpiece 106 and the at least one additional workpiece 108 is formed from a steel material. Each of the workpiece 106 and the at least one additional workpiece 108 comprises an aluminum based coating 118 thereon. In one embodiment, the workpiece 106 and the at least one additional workpiece 108 are positioned together to form an interface 112 therebetween and a weld joint 114 is formed by the laserwelder 102 between the workpiece 106 and the at least one additional workpiece 108 along the interface 112. In one embodiment, the filler wire feed 104 is configured to feed a filler wire 116 to the interface 112 when the workpiece 106 and the at least one additional workpiece 108 are being welded to each other (i.e., by the laser welder 102) to form the welded assembly 110. In one embodiment, the filler wire 116 comprises a composition that includes nickel and chromium. In one embodiment, the filler wire 116 is configured to bind with aluminum in the aluminum based coating 118 so as to minimize formation of brittle intermetallics due to mixing of the aluminum in the aluminum based coating 118 with iron or steel material in the weld joint 114.

In one embodiment, the filler wire 116 is configured to bind to aluminum in the aluminum based coating 118 so as to render the aluminum in the aluminum based coating 118 inert in the weld pool/joint 114. In one embodiment, the filler wire 116 is configured to bind to aluminum in the aluminum based coating 118 so as to prevent the formation of an aluminum - iron intermetallic phase in the weld bead/joint 114. In one embodiment, the filler wire 116 is configured to bind to aluminum in the aluminum based coating 118 so as to minimize mixing of the aluminum in the aluminum-based coating 118 with the iron/steel material in the weld joint 114.

In one embodiment, the laser welder 102 is configured to irradiate a laser beam 120 to weld the workpiece 106 to at least one additional workpiece 108 to form the welded assembly. In one embodiment, the laser welder 102 includes a direct diode laser. In another embodiment, the laser welder 102 includes a YAG laser. In yet another embodiment, the laser welder 102 includes a CO₂ laser. In yet another embodiment, the laser welder 102 includes a fiber laser. In one embodiment, the laser welder 102 is an automated laser welder.

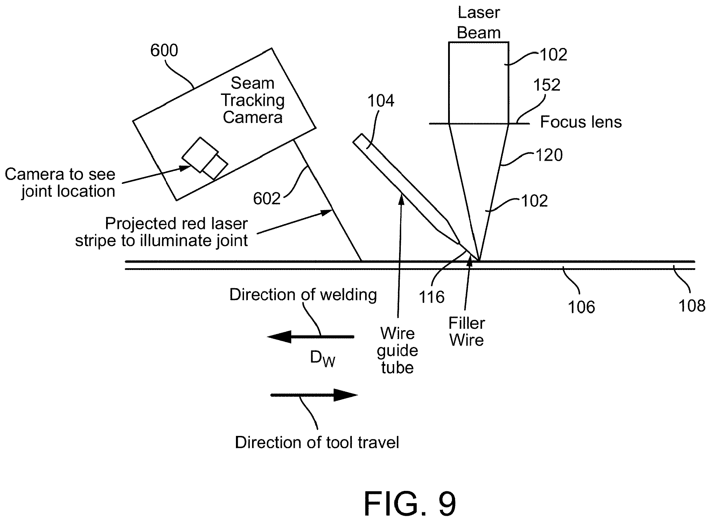

In one embodiment, during the laser weld procedure, the laser welder 102 is configured to produce either a continuous high power density laser beam 120 or a pulsed high power density laser beam 120 to melt the materials of the workpieces 106, 108 being joined. In one embodiment, the spot size of the laser beam 120 may be varied by adjusting the focal point of the laser beam 120. In one embodiment, the laser welder 102 includes a focus lens 152 as shown in FIG. 9 that is configured to focus the laser beam 120 onto the desired spot on the workpieces 106, 108 or onto the weld interface between the workpieces 106, 108.

In one embodiment, the system 100 includes a controller and/or one or more processors that are configured to control components of the system 100. In one embodiment, the one or more processors are configured to control the movement of the workpieces 106, 108 during the laser weld procedure. In one embodiment, the movement of the workpieces 106, 108 is achieved through movement of the worktable. In one embodiment, the one or more processors are configured to control the movement and/or the operation of the laser welder 102 during the laser weld procedure. In one embodiment, the one or more processors are configured to control the operation of the filler wire feed during the laser weld procedure. In one embodiment, the one or more processors is configured to control the movement of the laser beam 120 across the surfaces of the workpieces 106, 108. In one embodiment, the one or more processors is configured to control the movement of the filler wire feed material across the surfaces of the workpieces 106, 108.

In one embodiment, the laser welder 102 is configured to be dynamically adjustable to the workpieces 106, 108 into a variety of different joint configurations, such as lap joints, butt joints, T-joints, corner joints or edge joints. In one embodiment, the laser wattage and the spot size of the laser welder 102 are chosen based on the material(s) being welded, the material thickness and the joint configuration.

In one embodiment, the laser welder 102 includes an inert shield (or protective) gas system. In one embodiment, the inert shield gas system is configured to supply or provide an inert shield gas onto the workpieces 106, 108. In one embodiment, the inert shield gas is directed onto portions of the surfaces of the workpieces 106, 108 during the laser weld procedure. In one embodiment, the inert shield gas may be an inert gas (e.g., carbon dioxide, argon, helium, or any combination thereof) that is configured to shield the molten weld pool. In one embodiment, the inert shield gas system of the laser welder 102 include a gas flow sensor that is configured to sense/detect the flow rate of the inert shield gases used in the laser weld procedure. In one embodiment, the gas flow sensor is configured to provide a signal proportional to the gas flow rate in the inert shield gas line. In one embodiment, the one or more processors of the laser welder 102 are configured to stop welding if the gas flow rate of the inert shield gas is not within a predetermined gas flow rate range. In one embodiment, the inert shield gas system is optional.

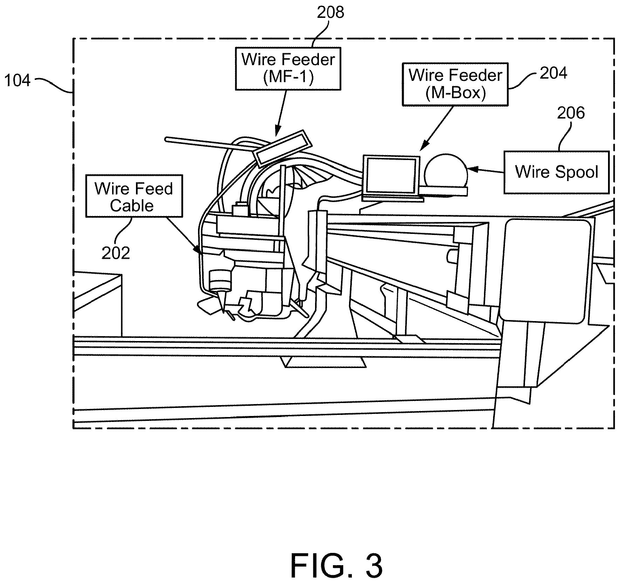

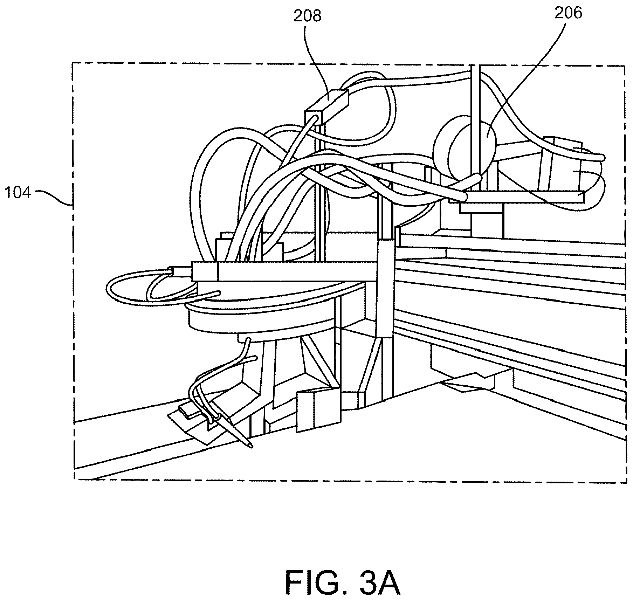

In one embodiment, the filler wire feed 104 is a filler wire feed shown in FIGS. 3-5. In one embodiment, the filler wire feed 104 includes one or more wire feed cables/tubings 202, a filler wire feed box 204, a filler wire spool 206, a wire feeder 208, and a wire feed nozzle 210.

In one embodiment, the filler wire 116 is stored on the filler wire spool 206, which is rotatably mounted in the filler wire feed 104. In one embodiment, the filler wire 116 is guided by or passes through the one or more wire feed cables/tubings 202 positioned between the filler wire spool 206 and the wire feed nozzle 210. In one embodiment, the filler wire 116 then exits through the wire feed nozzle 210. In one embodiment, the filler wire feed 104 includes drive rollers (e.g., electrical powered) that are configured to move the filler wire 116 through one or more wire feed cables/tubings 202 and the wire feed nozzle 210. In one embodiment, all the components of the filler wire feed 104 are made of material that is configured to withstand high weld temperatures.

In one embodiment, the wire feeder 208, shown in FIG. 3, is a master wire feed drive. In one embodiment, the filler wire feed box 204, shown in FIG. 3, is a slave wire feed drive. In one embodiment, the master wire feed drive 208 and the slave wire feed drive 204, both shown in FIG. 3, are servo-motor wire feed drives. In one embodiment, the slave wire feed drive 204 is configured to pull the wire off the filler wire spool and feed the filler wire toward the master wire feed drive 208. In one embodiment, the master wire feed drive 208 is configured to control the speed at which the filler wire is fed into the process. In one embodiment, both the servo-motor wire feed drives (i.e., the master wire feed drive 208 and the slave wire feed drive 204 as shown in FIG. 3) are controlled by an E-Box (not shown in the figures). In one embodiment, the E-box is configured to receive wire feed commands from a cell control (e.g., PLC or robot) and coordinate the two drives to deliver the commanded wire rate. In one embodiment, the part names for the master wire feed drive 208 and the slave wire feed drive 204 (shown in FIG. 3) are model designations for an Abicor-Binzel wire feed system. In one embodiment, other equivalent and interchangeable systems made by different manufacturers may be used for the master wire feed drive 208 and the slave wire feed drive 204 (as shown in FIG. 3). In one embodiment, the filler wire can also be stored on a filler wire barrel or other storage systems as would be appreciated by one skilled in the art. In one embodiment, the filler wire barrels, as opposed to filler wire spools, are used as these filler wire barrels last longer.

In one embodiment, each of the workpiece 106 and the at least one additional workpiece 108 is formed from a steel material. In one embodiment, each of the workpiece 106 and the at least one additional workpiece 108 may be referred to as base metal. In one embodiment, each of the workpiece 106 and the at least one additional workpiece 108 is formed from a steel alloy material. In one embodiment, each of the workpiece 106 and the at least one additional workpiece 108 is formed from boron steel. In one embodiment, each of the workpiece 106 and the at least one additional workpiece 108 is formed from manganese boron steel. In one embodiment, the workpiece 106 and the at least one additional workpiece 108 is formed from different steel grades.

In one embodiment, the workpieces 106, 108 are held on a worktable prior to the laser weld procedure and during the laser weld procedure.

In one embodiment, each of the workpiece 106 and the at least one additional workpiece 108 comprises an aluminum based coating 118 thereon. In one embodiment, each of the workpiece 106 and the at least one additional workpiece 108 comprises the aluminum based coating 118 on both on top and bottom surfaces 122 and 124. In one embodiment, each of the workpiece 106and the at least one additional workpiece 108 comprises an aluminum silicon coating 118 thereon.

There is a theory and some preliminary experimental results developed by one of the inventors/applicants, Dr. Hongping Gu, at the SCFI (Stronach Centre for Innovation), that adding trace amounts of a metallurgical additive in the form of a powder (i.e., consisting of substantial amounts of Nickel and Chromium) can modify the aluminum-iron reaction in the weld melt pool, and improve weld properties. The powdered additive, however, has some drawbacks.

In one embodiment, trace amounts of a metallurgical additive are added in the form of the filler wire 116. Additional studies have been performed with the metallurgical additive that yielded results that are more positive. It is also found that the metallurgical additive in the form of the filler wire 116 yields good quality welds in regards to strength, fatigue, and corrosion. The physical structure of the weld formed using the method of the present patent application also meets the criteria of all OEMs (Original Equipment Manufacturers). Since the metallurgical additive acts as a filler material, the laser welds handle variance in gap sizes well. In one embodiment, the filler wire 116 and powdered additive are applied simultaneously.

In one embodiment, the filler wire 116 is configured to reduce the effect of gap variances and fill in weld defects such as undercuts. In one embodiment, the filler wire 116 is also configured to bind with the aluminum silicon coating to provide acceptable weld mechanical properties. In one embodiment, the filler wire 116 is also tracked using an encoder, which makes quality assurance and tracking much more efficient and certain. In one embodiment, the filler wire feed speed is varied using adaptive welding to vary the weld speed according to gaps or other miscellaneous features in the weld line. Lastly, this procedure or process in accordance with the present patent application is cleaner because loose powder (i.e., powdered additive) will not make its way onto the floor and/or tooling.

In one embodiment, the chemical composition of the filler wire 116 includes substantial amounts of Nickel and Chromium. In one embodiment, the nickel and chromium filler wire 116 is configured to bind with the aluminum-silicon coating of Usibor steel.

In one embodiment, the filler wire may include other elements such as the alloying elements in the base material (Usibor) that promote hardenability of the weld joint along with Nickle and Chromium.

In one embodiment, the percentage weight of Nickel in the filler wire 116 is between 51.10 and 63.90. In one embodiment, the percentage weight of Chromium in the filler wire 116is between 7.20 and 16.00. In one embodiment, the percentage weight of Chromium in the filler wire 116 is 19. In one embodiment, the percentage weight of Chromium in the filler wire 116 is between 7.20 and 24.00.

In one embodiment, the percentage of Nickel in the filler wire 116 is between 1.68 and 2.85. In one embodiment, the percentage of Chromium in the filler wire 116 is between 0 and 2.7. In one embodiment, the percentage of Chromium in the filler wire 116 is between 0.49 and 0.83. In one embodiment, the percentage of Chromium in the filler wire 116 is between 0.49 and 0.95. In one embodiment, the percentage of Chromium in the filler wire 116 is between 0.49 and 1.00.

In one embodiment, the material includes nickel based steel alloy, for example, Hastelloy C267. In one embodiment, the Hastelloy C267 material has 57% of Ni and 16% of Cr.

In one embodiment, the material includes 4340 wire. In one embodiment, the 4340 wire material includes 1.8% Nickel and 0.78% Chromium.

In another embodiment, the percentage of Nickel in the filler wire 116 is between 7.80 and 10.40. In another embodiment, the percentage of Chromium in the filler wire 116 is between 2.10 and 2.70.

In yet another embodiment, the percentage of Nickel in the filler wire 116 is between 2.72 and 4.63. In yet another embodiment, the percentage of Chromium in the filler wire 116 is between 0.72 and 1.22.

In one embodiment, the carbon content in the filler wire 116 is between 0% and 0.59%. In one embodiment, the carbon content in the filler wire 116 is between 0.91% and 2.00%. In one embodiment, the carbon content in the filler wire 116 is created prior to drawing the filler wire 116. In one embodiment, the filler wire 116 includes a gradient of diffused carbon therein. In one embodiment, the filler wire 116 undergoes a carburizing process. In one embodiment, the carbon content is added using a carburizing process on an already drawn filler wire. In one embodiment, the carburizing process is configured to diffuse the carbon into the filler wire 116. In one embodiment, the carbon is added in any other alternate process/procedure that would be appreciated by one skilled in the art.

In one embodiment, the filler wire 116 may include up to 1% weight of Carbon. In one embodiment, the filler wire 116 may include from 0.35 to 0.80 % weight of Carbon. In one embodiment, the filler wire 116 may include from 0.35 to 0.90 % weight of Carbon. In one embodiment, the carbon present in the filler wire 116 may have an impact on hardness and microstructure. In one embodiment, the carbon present in the filler wire may substantially help the metallurgy.

In one embodiment, the Manganese (Mn) content in the filler wire 116 is between 0% and 0.29%. In one embodiment, the Manganese content in the filler wire 116 is between 0.3% and 0.9%. In one embodiment, the Manganese content in the filler wire 116 is between 0.91% and 2%.

In one embodiment, a method of cutting the material may affect the required/needed chemical composition of the filler material. In one embodiment, the preparation of the edges may affect the required/needed chemical composition of the filler material. In one embodiment, the trim type of the parts/edges may affect the required/needed chemical composition of the filler material. In one embodiment, the edges of the workpieces are prepared by laser cutting procedure. In another embodiment, the edges of the workpieces are prepared by shear cutting procedure. In one embodiment, the edges are machined. For example, in one embodiment, the chemical composition of the filler material needed for the laser cut edges may be different than the chemical composition of the filler material needed for the sheared edges.

In one embodiment, the nickel in the filler wire 116 is configured to bind with the aluminum in the aluminum based coating 118, while the chromium in the filler wire 116 is configured to harden the weld for improved mechanical performance.

In one embodiment, the filler wire may include 4340 Chrome-Molybdenum low alloy wire. In one embodiment, the filler wire may include Carburized 4340 wire. In one embodiment, the filler wire may include Stainless Steel 316L wire.

In one embodiment, in addition to the effects on the weld, the filler wire 116 is also configured to reduce the manufacturing costs of laser blank welding aluminum-silicon coated boron steel. First, if the addition of the metallurgical additive in the form of the filler wire 116 neutralizes the aluminum-silicon coating, then the blanks do not have to go through a laser ablation procedure (e.g., as shown discussed in the prior art method in the background section of the present patent application). This would save costs on the capital investments in the laser ablation equipment and manufacturing costs by eliminating the requirement for a W.I.P. (work in progress).

Secondly, with the addition of the metallurgical additive in the form of the filler wire 116, the tolerance on the weld gap will be larger, meaning that a fine blanking press may not be required. This may save additional capital costs because a conventional blanking press can be used.

Lastly, since the addition of the metallurgical additive in the form of the filler wire 116 is a more robust process/procedure that is configured to fill in undercuts, it could reduce the scrap rate of the process/procedure.

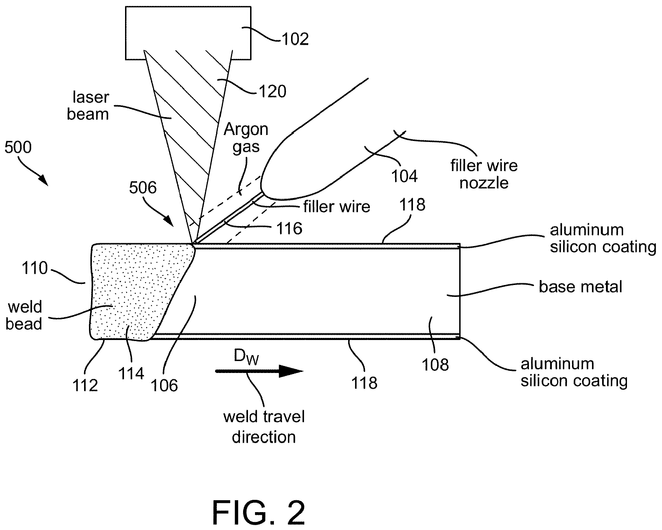

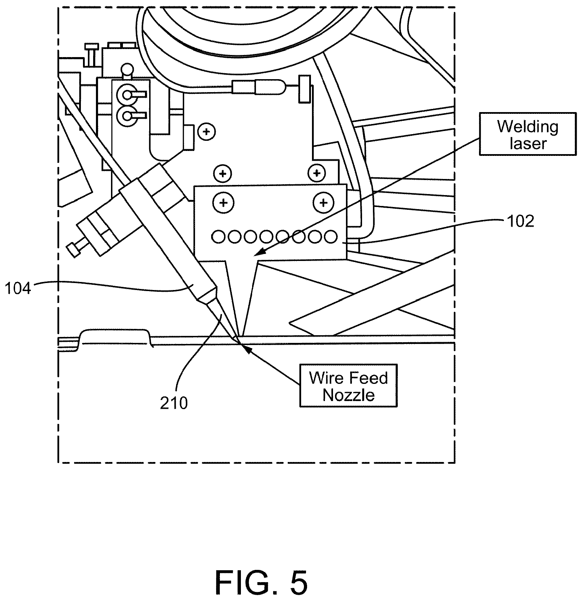

FIGS. 1-2 and 6-7 show a method 500 for laser welding the workpiece 106 and the at least one additional workpiece 108 to form a welded assembly in accordance with an embodiment of the present application. In one embodiment, the method 500 comprises positioning (e.g., procedure 502 as shown in FIG. 5) the workpiece 106 and the at least one additional workpiece 108 together to form the interface 112 therebetween. As noted above, in one embodiment, each of the workpiece 106 and the at least one additional workpiece 108 is formed from a steel material. As noted above, in one embodiment, each of the workpiece 106 and the at least one additional workpiece 108 comprises the aluminum based coating 188 thereon. In one embodiment, the method 500 also comprises: forming (e.g., procedure 504 as shown in FIG. 2) the weld joint 114, by the laser welder 102, between the workpiece 106 and the at least one additional workpiece 108 along the interface 112; and feeding (e.g., procedure 506 as shown in FIGS. 1 and 2) the filler wire 116, by a filler wire feed 104, to the interface 112 when the workpiece 106 and the at least one additional workpiece 108 are being welded to each other to form the welded assembly.

FIGS. 1 and 2 show two orthogonal views of the same wire feed arrangement, in which the filler wire feed 104 is positioned in front with respect to the laser welder 102 and/or the workpieces 106 and 108. As shown in FIG. 2, the filler wire feed 104 (i.e., supplying the filler wire 116) is positioned ahead (i.e., in the direction of the welding D_{w}) of the laser welder 102. In one embodiment, as shown in FIG. 1, the filler wire feed 104 (i.e., supplying the filler wire 116) is positioned on the same longitudinal axis as the laser welder 102. In one embodiment, as shown in FIG. 1, the filler wire feed 104 (i.e., supplying the filler wire 116) is positioned at an angle with respect to the workpieces 106, 108. FIGS. 1 and 2 show different views of the same process. In one embodiment, the filler wire is fed at an angle.

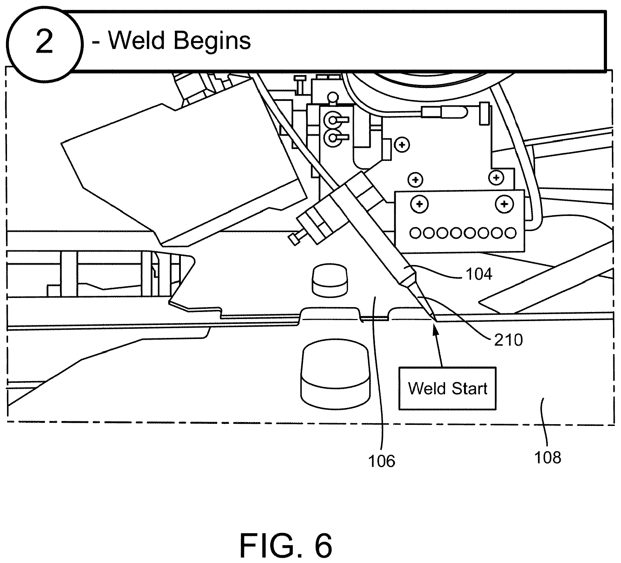

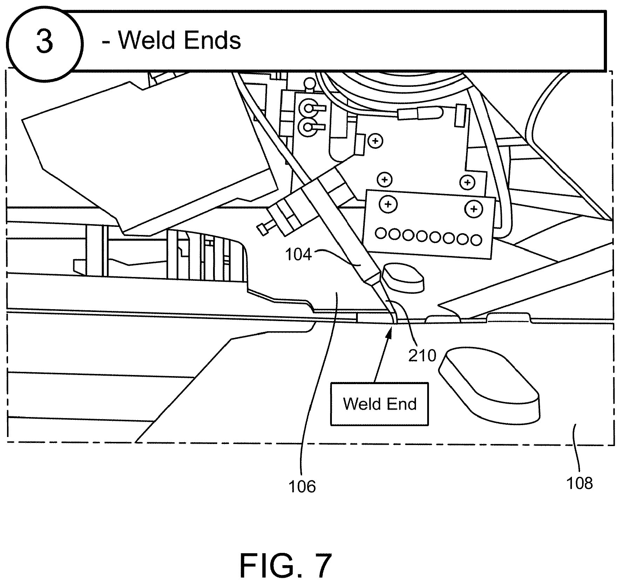

FIG. 6 shows a procedure of the method 500 in which a weld start position in shown, while FIG. 7 shows a procedure of the method 500 in which a weld end position is shown. Both the laser welder 102 (projecting the laser bean 120) and the filler wire feed 104 (providing the filler wire 116) are moved over a weld path between the weld start position of FIG. 6 and the weld end position of FIG. 7.

In one embodiment, as discussed above, the filler wire 116 comprises a composition that includes nickel and chromium.In one embodiment, the method 500 further comprises binding the filler wire 116 with aluminum in the aluminum based coating 118, when the workpiece 106, 108 and the at least one additional workpiece 106, 108 are being welded to each other to form the welded assembly, so as to minimize the formation of brittle intermetallics due to the mixing of the aluminum in the aluminum based coating 118 with the iron/steel material in the weld joint 114.

In one embodiment, the method 500 further binding the filler wire with aluminum in the aluminum based coating, when the workpiece and the at least one additional workpiece are being welded to each other to form the welded assembly, so as to minimize the formation of brittle intermetallics due to the mixing of the aluminum in the aluminum based coating 118 with the iron/steel material in the weld joint 114.

In one embodiment, the present patent application minimizes the aluminum reaction with iron. In one embodiment, the aluminum-iron intermetallic is the main brittle intermetallic being formed. In one embodiment, the filler wire of the present patent application is configured to prevent the formation of this aluminum-iron intermetallic. In one embodiment, the nickel in the filler wire is configured to bind with the aluminum.

In one embodiment, the tensile strengths of the weld joint and the workpieces are equal to or greater than 1200 MPa. In one embodiment, the tensile strengths of the workpieces are equal to 1500 MPa.

In one embodiment, the hardnesses of the weld joint and the workpieces are equal to or greater than 400HV

In one embodiment, the workpieces include Usibor^{®} (a high resistance boron micro alloyed aluminum-silicon steel) workpieces. In one embodiment, the workpieces include Ductiobor^{®} (a high resistance boron micro alloyed aluminum-silicon steel) workpieces. In one embodiment, the tensile strengths of the weld joint and the workpieces that are made of Usibor^{®} or Ductiobor^{®} are about 500 MPa. In one embodiment, the hardnesses of the weld joint and the workpieces that are made of Usibor^{®} or Ductiobor^{®} are less than 400HV. In one embodiment, the workpieces include any brand of boron steel that uses an aluminum silicon coating.

In one embodiment, the weld joint formed using the system and method of the present patent application includes a martensite microstructure. In one embodiment, the workpieces are welded together to form weld assembly. In one embodiment, the weld assembly then undergoes a heat treatment process and a cooling process. In one embodiment, during the heat treatment process, the metallurgy of the weld assembly is 100% martensitic. After the cooling process, the weld assembly has a martensitic microstructure. In one embodiment, there may be small trace amounts of other microstructures, but the vast majority of the weld assembly is martensitic microstructure after the heat treatment process.

In one embodiment, the method 500 of the present patent application provides shifts in a continuous cooling transformation (CCT) phase diagram to promote martensitic microstructure.

In one embodiment, unlike the AMTB procedure as described in the background section of the present patent application, there is no ablation of the aluminum based coating or uncoating of the aluminum based coating required in the method 500 of the present patent application. In one embodiment, the method 500 does not require an ablation procedure (e.g., by an ablation laser) to remove the aluminum-silicon coating. In one embodiment, the method 500 does not require any uncoating procedure to remove the aluminum-silicon coating. This creates a cheaper and faster manufacturing process or procedures.

In one embodiment, unlike the powder process or procedure as described in the background section of the present patent application, the method 500, in one embodiment, is a cleaner procedure or process. That is, there is no residual powder on part surface(s), on the floor, and/or tooling surface(s). In other words, the cleaner tooling surface(s), the cleaner part surface(s), and the cleaner floor are better for a production environment to keep the manufacturing cell cleaner and prevent powder from creating an unclean environment and potentially clogging things.

In one embodiment, the method 500, in one embodiment, is performed on blanks having thicknesses that are less than 1.8 mm. In one embodiment, the method 500 is also performed on blanks having same thickness. In one embodiment, the method 500 is also performed on blanks having stepped joints. In one embodiment, the method 500 is configured to weld together steel blanks with a range of thickness from a minimum of 0.5 mm to a maximum of 5.0 mm, with a maximum thickness ratio of 5:1. In one embodiment, the method 500 is configured to weld together steel blanks having a step thickness of less than 0.40 mm. In one embodiment, step thickness difference or jump in thickness is less than 0.19 mm or greater than 0.41 mm. In one embodiment, the method 500 is configured to weld all reasonable steel sheet thickness for tailored blanks.

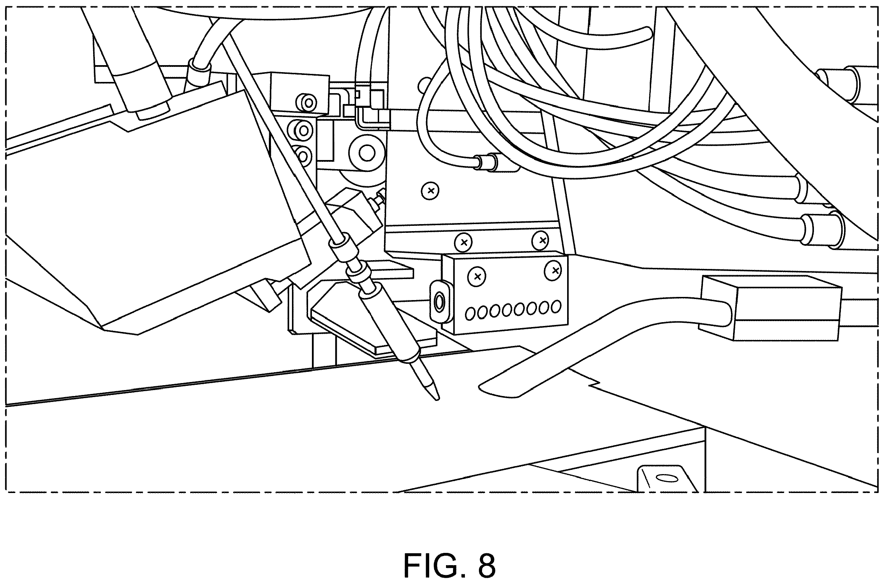

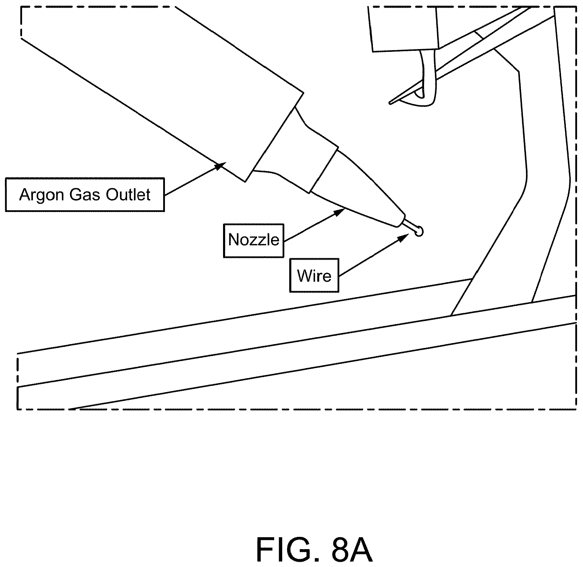

In one embodiment, the system 100 of the present patent application is able to perform laser weld procedure on all reasonable steel sheet thickness for tailored blanks as the system 100 uses an optical seam tracker 600 as shown in FIGS. 8 and 9. In one embodiment, the optical seam tracker 600 is configured to project a laser beam 602 to illuminate the weld interface. In one embodiment, the optical seam tracker 600 includes an optical seam camera. In one embodiment, the camera is configured to see the weld interface or weld joint location. In one embodiment, the optical laser is used to inspect, measure, and evaluate the seam prior to welding. In one embodiment, the optical laser is used to inspect, measure, and evaluate the weld. In one embodiment, there is an optical laser in front and behind the weld process to inspect, evaluate, and measure the weld seam and weld bead.

As shown in FIG. 9, both the optical seam tracker 600 and the filler wire feed 104 (i.e., supplying the filler wire 116) are positioned ahead (i.e., in the direction of the welding D_{W}) of the laser welder 102. In another embodiment, the optical seam tracker 600 is positioned ahead (i.e., in the direction of the welding Dw) of the laser welder 102 and the filler wire feed 104 (i.e., supplying the filler wire 116) is positioned on the same longitudinal axis as the laser welder 102 (e.g., similar to the arrangement of the laser welder 102 and the filler wire feed 104 in FIG. 1).

In various contemplated embodiments, different, specifically formulated chemical compositions of the filler wire are provided. For example, the chemical composition of the filler wire 116 contains Nickel (Ni) and at least one of: Carbon (C), Silicon (Si), Manganese (Mn), Phosphorous (P), Sulfur (S), Chromium (Cr), or Molybdenum (Mo). In one embodiment, the C content in the filler wire 116 is between 0% to 1.5% by weight, Si content in the filler wire 116 is between 0% to 3% by weight, Mn content in the filler wire 116 is between 0% to 2.5% by weight, P content in the filler wire 116 is between 0% to 0.05% by weight, S content in the filler wire 116 is between 0% to 0.03% by weight, Ni content in the filler wire 116 is between 6% to 22% by weight, Cr content in the filler wire 116 is between 16% to 30% by weight, and Mo content in the filler wire 116 is between 0% to 4% by weight. In aforementioned chemical composition, the remaining element in aforementioned composition of filler wire is Iron (Fe).

In one embodiment, the filler wire 116 material includes carburized wire. In an example, a carburized 4340 wire material includes 1.3% Carbon, 0.78% Chromium, 0.85% Manganese, 0.25% Molybdenum, 1.8% Nickel, 1.8% Silicon, 0.011% Phosphorus, and 0.014% Sulfur, the percentages being by weight. In some embodiments, the remaining element in aforementioned composition of filler wire is Iron (Fe).

In one embodiment, the filler wire 116 material is a stainless steel including e.g., Ni, Cr, or C. In an example, the 316L wire material includes 0.03% Carbon, 17% Chromium, 2% Manganese, 2.5% Molybdenum, 12.5% Nickel, 0.75% Silicon, 0.045% Phosphorus, and 0.03% Sulfur, the percentages being by weight. In aforementioned chemical composition, the remaining element in aforementioned composition of filler wire is Iron (Fe).

According to the present disclosure, the filler wires including e.g., Ni, or C within the percentage by weight ranges, discussed herein, act as an austenite stabilizing element. As such, a ferrite microstructure formation is prevented in the welding zone at temperature ranging from 900°C to 950°C. Weld joints having austenitic microstructure or ferritic microstructure may cause cracking in the weld, weld having less tensile strength than the workpeices being welded, create granular weld, or other weld related issues.

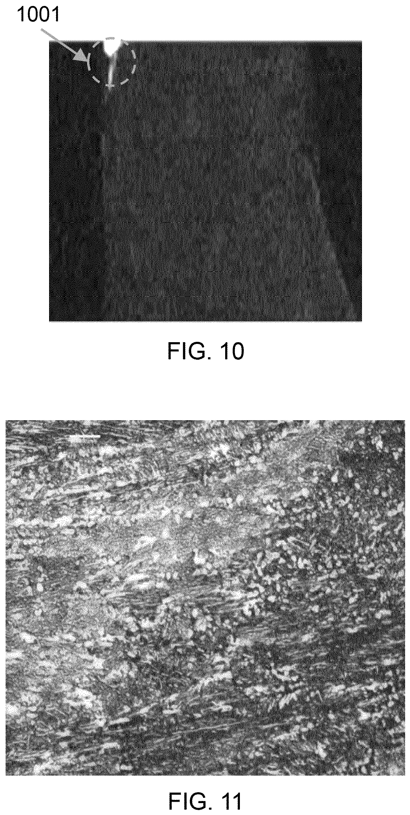

Referring to Figures 10 and 11, when no wire or welding with filter wires that do not have composition discussed herein (e.g., without Ni, or C), a strength (e.g., ultimate tensile strength (UTS)) of the welded joint is lower than 1200MPa. In addition, the welded joint fails (e.g., break, cracks, etc.) during cooling or when loaded. From spectroscopy (e.g., EDX) results, as shown in Figure 10, aluminum (lighter grey pixels in the image) is not well distributed or mixed in the weld and there is evidence of high concentration of aluminum areas (e.g., region 1001 in Figure 10). Figure 11 shows a microstructure of the weld seam. The microstructure also shows a substantial amount of Ferrite (lighter grey pixels in the image) mixed with Martensite. For example, Ferrite amounts to 10-70% by weight and Martensite may amount to 30-90% by weight. As a result, the welded joint is brittle or has lower strength compared to welded joint formed using filler wires discussed herein.

Consider welding two plates using an existing filler wire. For example, welding a combination of 1.2mm Boron steel with AISi coating and 1.6mm Boron steel with AISi coating with no filler wire (other than discussed herein). The resulting welded joint has a minimum UTS 800MPa, but less than 1200 MPa and a minimum Vickers hardness of HV250.

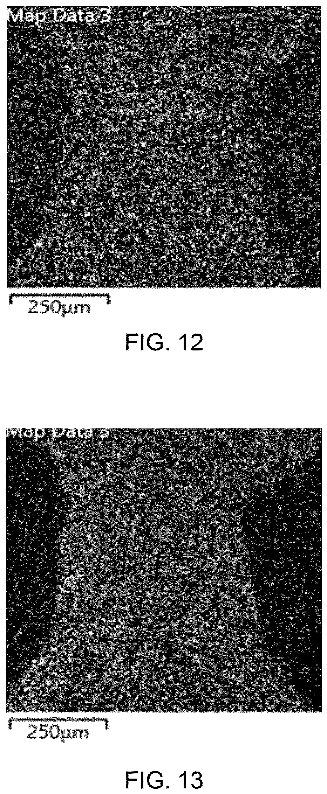

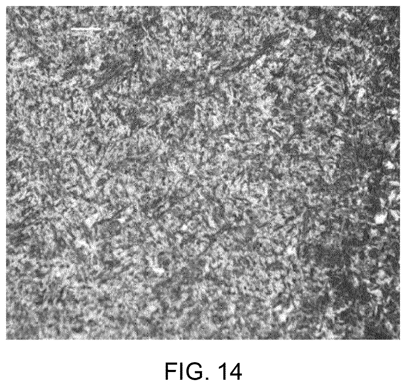

When the filler wires discussed herein is used, strength (UTS) of the welded joint is greater than 1200MPa. Additionally, the weld is not broken or cracked. Figures 12 and 13 shows spectroscopy results (e.g., EDX) with Al and Ni distributions, respectively, in the weld. As shown, aluminum is well distributed or mixed in the weld (in Figure 12). Also, Ni is also well distributed through the fusion zone of the weld (in Figure 13). Furthermore, the use of Ni or C ensures sufficient martensite (lighter grey pixels) in the weld seam, as shown in Figure 14. In an embodiment, an amount of Martensite may be over 90% by weight. Due to the Martensite structure, a higher weld strength is obtained, for example. In an example, when a filler wire (as discussed herein) is used, the welded joint has a minimum UTS of 1200 MPa and a minimum Vickers hardness of Hv350. In another example, the filler wire composition described herein may have a chemical composition of C 0.03%, Mn 2.0%, Si 0.8%, P <0.05%, S<0.05%, Mo 2.5% Cr 17%, Ni 12.5%, the percentages being by weight. Upon welding using the aforementioned composition, a minimum hardness of welded joint is 412Hv and the UTS of welded joints is more than 1450MPa. Clearly, using filler wires with compositions discussed herein, generates a better weld (e.g., in terms of hardness and UTS) compared to existing filler wires (or no wires).

Although the present patent application has been described in detail for the purpose of illustration, it is to be understood that such detail is solely for that purpose and that the present patent application is not limited to the disclosed embodiments, but, on the contrary, is intended to cover modifications and equivalent arrangements that are within the spirit and scope of the appended claims. In addition, it is to be understood that the present patent application contemplates that, to the extent possible, one or more features of any embodiment can be combined with one or more features of any other embodiment.

## Claims

1. A system comprising:
a laser welder configured to weld a workpiece to at least one additional workpiece to form a welded assembly, each of the workpiece and the at least one additional workpiece is formed from a steel material and comprises an aluminum based coating thereon,
wherein the workpiece and the at least one additional workpiece are positioned together to form an interface therebetween and a weld joint is formed by the laser welder between the workpiece and the at least one additional workpiece along the interface; and
a filler wire feed configured to feed a filler wire to the interface when the workpiece and the at least one additional workpiece are being welded to each other to form the welded assembly,
wherein the filler wire comprises a composition that includes nickel (Ni) and chromium (Cr), and
wherein a percentage by weight of Ni is between 6%-22% and a percentage by weight of Cr is between 16%-30%.

2. The system of claim 21, wherein the laser welder is configured to irradiate a laser beam to weld the workpiece to at least one additional workpiece to form the welded assembly.

3. The system of claim 22, wherein the filler wire is configured to bind with aluminum in the aluminum based coating so as to minimize formation of brittle intermetallics due to mixing of the aluminum in the aluminum based coating with the iron/steel material in the weld joint.

4. The system of claim 23, wherein the nickel in the filler wire is configured to bind with the aluminum in the aluminum based coating so as to minimize the formation of brittle intermetallics due to the mixing of the aluminum in the aluminum based coating with the iron/steel material in the weld joint.

5. The system of claim 24, wherein the aluminum based coating includes an aluminum silicon coating.

6. The system of claim 25, wherein the workpiece and the at least additional workpiece are laser welded without removing the aluminum based coatings the workpiece and the at least one additional workpiece.

7. The system of claim 21, wherein the filler wire further comprises at least one of: carbon (C), Silicon (Si), Manganese (Mn), Phosphorous (P), Sulfur (S), or, Molybdenum (Mo).

8. The system of claim 27, wherein:
C content is between 0% to 1.5% by weight,
Si content is between 0% to 3% by weight,
Mn content is between 0% to 2.5% by weight,
P content is between 0% to 0.05% by weight,
S content is between 0% to 0.03% by weight,
Ni content is between 6% to 22% by weight,
Cr content is between 16% to 30% by weight, or
Mo content is between 0% to 4% by weight.

9. A method for laser welding a workpiece and at least one additional workpiece to form a welded assembly, the method comprising:
positioning the workpiece and the at least one additional workpiece together to form an interface therebetween, each of the workpiece and the at least one additional workpiece is formed from a steel material and comprises an aluminum based coating thereon,
forming a weld joint, by a laser welder, between the workpiece and the at least one additional workpiece along the interface,
feeding a filler wire, by a filler wire feed, to the interface when the workpiece and the at least one additional workpiece are being welded to each other to form the welded assembly, wherein the filler wire comprises a composition that includes nickel (Ni) and chromium (Cr), a percentage of Ni being between 6-22% and a percentage of Cr being between 16-30% by weight, and
binding the filler wire with aluminum in the aluminum based coating, when the workpiece and the at least one additional workpiece are being welded to each other to form the welded assembly, so as to minimize formation of brittle intermetallics due to mixing of the aluminum in the aluminum based coating with the iron/steel material in the weld joint.

10. The method of claim 29, wherein the weld joint is formed between the workpiece and the at least one additional workpiece without removing the aluminum based coatings on the workpiece and the at least one additional workpiece.

11. The method of claim 30, wherein the filler wire further comprises at least one of: carbon (C), Silicon (Si), Manganese (Mn), Phosphorous (P), Sulfur (S), or, Molybdenum (Mo).

12. The method of claim 31, wherein:
C content is between 0% to 1.5% by weight,
Si content is between 0% to 3% by weight,
Mn content is between 0% to 2.5% by weight,
P content is between 0% to 0.05% by weight,
S content is between 0% to 0.03% by weight,
Ni content is between 6% to 22% by weight,
Cr content is between 16% to 30% by weight, or
Mo content is between 0% to 4% by weight.
